# EUROPEAN PATENT SPECIFICATION

(11) **EP 4 223 018 B1**
(45) Date of publication and mention of the grant of the patent: **03.12.2025**
(21) Application number: 21770284.4
(22) Date of filing: 21.09.2021
(51) Int. Cl.: H04W 52/02, H04W 52/00, H04W 84/18, H04W 88/08

(54) **MAINS POWERED DEVICE WHICH REBROADCASTS A BEACON SIGNAL MULTIPLE TIMES**
NETZBETRIEBENE VORRICHTUNG, DIE EIN BAKENSIGNAL MEHRMALS NEUÜBERTRÄGT
DISPOSITIF ALIMENTÉ PAR SECTEUR QUI REDIFFUSE UN SIGNAL DE BALISE À PLUSIEURS REPRISES

(30) Priority: 29.09.2020 EP 20198917
(43) Date of publication of application: 09.08.2023
(73) Proprietor: Signify Holding B.V., 5656 AE Eindhoven (NL)
(72) Inventor: HAVERLAG, Marco, 5656 AE Eindhoven (NL); ESTEVEZ, Francisco, 5656 AE Eindhoven (NL)
(74) Representative: Verweij, Petronella Daniëlle
(86) International application number: PCT/EP2021/075953
(87) International publication number: WO 2022/069297

(56) References cited:
- WO-A1-2017/140950
- WO-A1-2020/043592
- US-A1- 2015 369 618

## Description

### FIELD OF THE INVENTION

The invention relates to a mains-powered electronic device for wirelessly broadcasting a plurality of beacons.

The invention further relates to a method of wirelessly broadcasting a plurality of beacons.

The invention also relates to a computer program product enabling a computer system to perform such a method.

### BACKGROUND OF THE INVENTION

There is an ongoing trend in the professional lighting market to move more and more towards (wirelessly) connected lighting systems which enable all kinds of new features like (remote) scheduling, energy monitoring, sensor-based lighting control, BLE (Bluetooth Low Energy) based indoor location services and asset management. As such a professional connected lighting system already offers a fine-grained network of nodes, this may offer additional possibilities for integration of non-lighting related modalities, which can piggy-back on the communication infrastructure offered by the lighting system.

For example, US2015369618A1 discloses a method of providing navigation instructions to a mobile device by geofencing.

At the same time, the use of battery-powered sensor devices which detect all kinds of things is becoming more and more widespread. Outdoor, their applications range from finding empty parking spots in a car park or parking garage and detecting the presence/availability of an electric car charging station to determining air quality and frosting of the underground. In agricultural applications, for example, sensors exist that measure moisture levels in the ground, temperature and humidity in the air. Indoor, sensors could measure motion/presence, real air temperature, or the occupancy of a seat in an open office space, or a conference room, for example.

In case beacons are used for ad hoc messaging of sensor data, e.g. in the case where BLE beacons are used to indicate an empty parking spot, there may be no infrastructure to relay the information towards the Internet. In that case, the beacons may be used to directly inform the user that the parking spot is empty. The advantage of such a system is that no cloud infrastructure needs to be organized, making the system very simple to implement and to maintain.

The main advantage of using battery-powered sensors is their positional freedom of placement. They can be placed in any position, as they do not need a power connection. This comes at a disadvantage, which is the lifetime of the battery. Even though BLE offers a very power efficient radio (mainly due to the ability to stay in a sleep mode most of the time), this means that batteries must be replaced regularly, which means a lot of manual work, which adds to the overall cost of using these sensor devices. It is therefore desirable to reduce power consumption.

If beacons are only broadcast to indicate the presence of a device and subsequent communication is performed via bidirectional communication, then a selected device could broadcast a simplified beacon to indicate the presence of a group of simple devices without requiring the simple devices to transmit beacons themselves, as described in US 9,402,269 B2. This would reduce the simple devices' power consumption.

However, when beacons are broadcast to convey data, this is not a suitable solution. By broadcasting beacons with a relatively large interval between successive broadcasts, battery lifetime can be preserved, but this could mean that a user (device) does receive the beacon in time to act on it.

### SUMMARY OF THE INVENTION

It is a first object of the invention to provide a mains-powered electronic device, the mains-powered electronic device being a lighting device, which is able to help battery-powered sensor devices send sensor data to a target device via broadcast without significant delay while reducing power consumption.

It is a second object of the invention to provide a method, which can be used to help battery-powered sensor devices send sensor data to a target device via broadcast without significant delay while reducing power consumption.

In a first aspect of the invention, according to the appended independent claim 1, a lighting device comprises a wireless receiver, a wireless transmitter, and at least one processor configured to receive, via said wireless receiver, a wireless broadcast of a beacon signal from a battery-powered sensor device, said beacon signal comprising sensor data of the battery-powered sensor device, and broadcast, via said wireless transmitter, a plurality of secondary beacon signals at different moments in time, each of said secondary beacon signals comprising said sensor data; wherein said at least one processor is configured to broadcast said plurality of secondary beacon signals until said at least one processor receives another beacon signal from said battery-power sensor device, said other beacon signal comprising said sensor data or second sensor data, and broadcast a plurality of other secondary beacon signals at different moments in time, each of said other secondary beacon signals comprising said sensor data or said second sensor data from said other beacon signal.

With the help of this lighting device, the battery-powered sensor devices can broadcast beacons with a relatively large interval between successive broadcasts and thereby preserve battery lifetime, while the lighting device ensures that the sensor data is transmitted to the target device without significant delay by rebroadcasting each beacon from the battery-powered sensor devices a plurality of times. This is especially beneficial for standalone meshed networks (e.g. the Signify MasterConnect system) in which there is no way to get the data out of the local network due to the lack of an Internet gateway and which typically do not have a local central data storage beyond a few Kbytes.

The broadcast of the beacon signal by the battery-powered sensor device is not particularly intended for the lighting device to receive, but the lighting device overhears the beacon signal and helps the battery-powered sensor device get the sensor data to the target device. As an additional advantage, the sensor data may be able to reach target devices that are out of range of the battery-powered sensor device.

Said electronic device may further comprise a light source for illuminating an environment. A general lighting device is an example of an electronic device that is normally mains-powered and located in many spaces. Other examples include a speaker device, an actuator device, a heating device, a HVAC (Heating, Ventilation, Air Conditioning), a bridge device, and a display device.

Said at least one processor may be configured to determine an amount of time and broadcast said plurality of secondary beacon signals for said specified amount of time. As a first example, said beacon signal may specify said amount of time and said at least one processor may be configured to determine said amount of time from said beacon signal. As a second example, said at least one processor may be configured to receive another beacon signal from said battery-power sensor device, determine an interval between receiving said beacon signal and receiving said other beacon signal and determine said amount of time based on said interval.

A similar effect may be achieved without explicitly determining an amount of time. For example, as mentioned, said at least one processor may be configured to broadcast said plurality of secondary beacon signals until said at least one processor receives another beacon signal from said battery-power sensor device, said other beacon signal comprising said sensor data or second sensor data, and broadcast a plurality of other secondary beacon signals at different moments in time, each of said other secondary beacon signals comprising said sensor data or said second sensor data from said other beacon signal.

Additionally or alternatively, said at least one processor may be configured to determine a rebroadcast interval and broadcast said plurality of secondary beacon signals with said rebroadcast interval between broadcasts of successive ones of said secondary beacon signals. Said beacon signal may specify said rebroadcast interval and said at least one processor may be configured to determine said rebroadcast interval from said beacon signal. Said at least one processor may be configured to determine said rebroadcast interval by comparing said beacon signal to a previously received beacon signal. For example, said at least one processor may reduce said rebroadcast interval, e.g. compared to a default rebroadcast interval or to a rebroadcast interval specified in the beacon signal, if a difference between sensor data of said beacon signal and sensor data of said previously received beacon signal does not exceed a predefined threshold.

Said at least one processor may be configured to receive, via said wireless receiver, a wireless broadcast of a rebroadcasted beacon signal from another lighting device, said rebroadcasted beacon signal comprising further sensor data, said further sensor data being received by said other lighting device from another battery-powered sensor device as part of an original beacon signal, broadcast, via said wireless transmitter, a further secondary beacon signal, said further secondary beacon signal comprising said further sensor data from said further beacon signal. By rebroadcasting already rebroadcasted beacon signals from another lighting device, the distance over which sensor data can be transmitted is (further) increased ('single hop' distance is typically a few tens of meters at best). This allows a user device to receive information from sensor devices that are farther away, e.g. to find a parking spot farther away.

Said at least one processor may be configured to determine a number of repetitions from said rebroadcasted beacon signal, increment said number of repetitions by one and include said incremented number of repetitions in said further secondary beacon signal. By letting the rebroadcasted signals comprise an entry indicative of the number of repetitions, incrementing this entry before rebroadcasting, and determining the number of repetitions from this entry, it becomes possible to limit the number of times a beacon signal is rebroadcast to reduce bandwidth use.

For example, said at least one processor may be configured to compare said number of repetitions with a threshold and broadcast said further secondary beacon signal in dependence on said number of repetitions not exceeding said threshold. The threshold may be preconfigured or maybe determined from the beacon signal or from another message, for example.

Without such a mechanism, the number of beacon signals broadcast by sensor devices and re-broadcast by electronic devices might become so large that the area becomes saturated with messages flying around, which may cause messages to get lost due to collisions. Another way of reducing bandwidth use is to reduce the number of less relevant or irrelevant messages that is broadcast. For example, in the case of a parking spot application, it may not be very interesting for the end-user (the driver looking for an empty spot) to get lots of messages from sensors that indicate that they are occupied. To reduce bandwidth use, the at least one processor may be configured to re-broadcast less relevant or irrelevant sensor data less often or not at all, e.g. if the parking spot(s) covered by a sensor device are occupied. The beacon signal broadcast by the sensor device may indicate whether the broadcast signal needs to be re-broadcast or not or may indicate the relevance of the sensor data.

Said beacon signal may comprise location information indicative of a location of said battery-powered sensor device and said at least one processor may be configured to include said location information in said plurality of secondary beacon signals. This makes it possible for a user to find out where the sensor device is located, e.g. if the sensor device has detected a free parking spot. The location information may, for example, comprise a reference that the user is able to recognize, e.g. a number that is also painted on a wall, or a description like "near parking spot A56".

Said at least one processor may be configured to receive, via said wireless receiver, a wireless broadcast of a user beacon signal from a user device, said user beacon signal comprising a device identifier, compare said received device identifier with a locally stored device identifier, and provide visual feedback in dependence on said device identifier matching said locally stored device identifier. This is beneficial, for example, if the beacon signal does not comprise location information. When it is not possible to determine the exact location of the sensor device, this makes it possible to locate the lighting device(s) nearest to the sensor device.

Said at least one processor may be configured to broadcast, via said wireless transmitter, a tertiary beacon signal, said tertiary beacon signal comprising said received device identifier. This allows the user device to get lighting devices that are farther away to provide visual feedback.

Said at least one processor may be configured to include said locally stored device identifier in said plurality of secondary beacon signals. By letting the lighting device that receives the beacon signal include its locally stored device identifier in rebroadcasted/secondary beacon signals, the user (device) is able to determine which device identifier to include in the user beacon signal.

For example, if a sensor device transmits a beacon signal that indicates a free parking spot, a first lighting device that receives this beacon signal includes its locally stored device identifier in the secondary beacon signal before broadcasting it, i.e. before rebroadcasting the beacon signal. A second lighting device that receives this rebroadcasted beacon signal does not include its own locally stored device identifier before rebroadcasting it. When the user indicates on the user device that he wants to go to the free parking spot, the user device broadcasts a user beacon signal with the received device identifier and the first lighting device provides visual feedback upon receiving the user beacon signal.

In a second aspect of the invention, according to the appended independent claim 13, a method of wirelessly broadcasting a plurality of beacons comprises receiving a wireless broadcast of a beacon signal from a battery-powered sensor device at a lighting device, said beacon signal comprising sensor data, and wirelessly broadcasting a plurality of secondary beacon signals at different moments in time, each of said secondary beacon signals comprising said sensor data. Said method may be performed by software running on a programmable device. This software may be provided as a computer program product.

Moreover, a computer, according to the appended independent claim 14, for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations for wirelessly broadcasting a plurality of beacons.

The executable operations comprise receiving a wireless broadcast of a beacon signal from a battery-powered sensor device at a lighting device, said beacon signal comprising sensor data, and wirelessly broadcasting a plurality of secondary beacon signals at different moments in time, each of said secondary beacon signals comprising said sensor data.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of an embodiment of the mains-powered electronic device;
Fig. 2 shows a parking garage with multiple mains-powered electronic devices and multiple battery-powered sensor devices;
Fig. 3 is a flow diagram of a first embodiment of the method;
Fig. 4 is a flow diagram of a second embodiment of the method;
Fig. 5 is a flow diagram of a third embodiment of the method;
Fig. 6 shows an example of beacons broadcast by two mains-powered devices of Fig. 2 which perform the method of Fig. 5 and by one battery-powered device;
Fig. 7 is a flow diagram of a fourth embodiment of the method; and
Fig. 8 is a block diagram of an exemplary data processing system for performing the method of the invention.

Corresponding elements in the drawings are denoted by the same reference numeral.

### DETAILED DESCRIPTION OF THE EMBODIMENTS

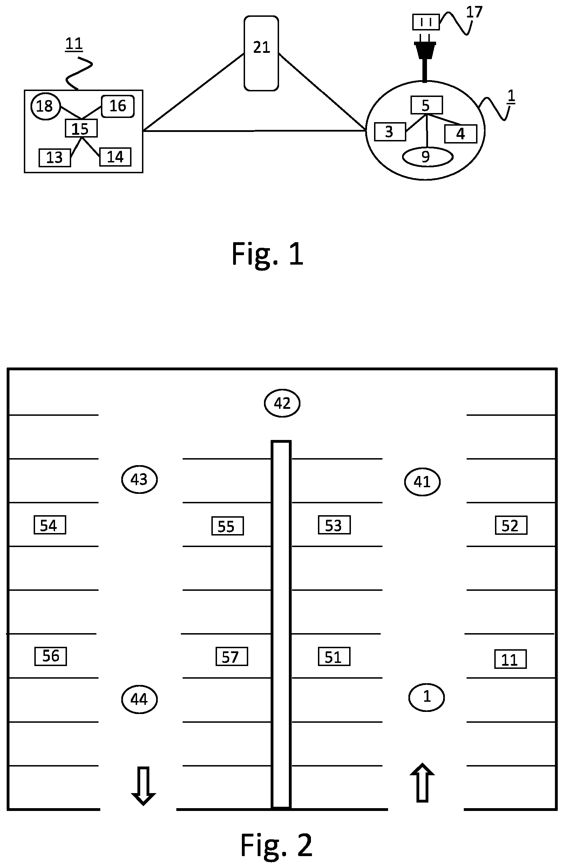

Fig. 1 shows an embodiment of the mains-powered electronic device: a lighting device 1. The lighting device 1 is connected to mains power 17. The lighting device 1 comprises a wireless receiver 3, a wireless transmitter 4, a processor 5, and a light source 9 for illuminating an environment. The light source 9 may comprise one or more LEDs, for example.

The processor 5 is configured to receive, via the wireless receiver 3, a wireless broadcast of a beacon signal from a battery-powered sensor device 11. The beacon signal comprises sensor data of the battery-powered sensor device 11. The processor 5 is further configured to broadcast, via the wireless transmitter 4, a plurality of secondary beacon signals at different moments in time. Each of the secondary beacon signals comprises the sensor data.

The battery-powered sensor device 11 comprises a wireless receiver 13, a wireless transmitter 14, a processor 15, a battery 16, and a sensor 18. The sensor 18 may be a motion sensor, moisture sensor, or thermometer, for example. A user device 21, e.g. a mobile device, is configured to receive the beacon signal from the battery-powered sensor device 11 and the secondary beacon signal from the lighting device 1.

In order to reduce power consumption, the battery-powered sensor device 11 transmits beacon signals with a lower interval between successive beacon signals. As the mains-powered lighting device 1 does not need to reduce power consumption in a similar manner, it can rebroadcast the beacon signals broadcasted by the battery-powered sensor device 11 as secondary beacon signals with a higher interval between successive secondary beacon signals, thereby allowing the user device 21 to receive the sensor data faster.

The battery-powered sensor device 11 may transmit the latest sensor data (which may be the same or different than previous sensor data) in a new beacon signal each interval or check each interval whether it has new sensor data and only transmit a new beacon signal if it has new sensor data (e.g. when detecting a value above a certain threshold value or detecting a change in a binary state, e.g. the presence or people or the occupation of a car park spot).

Lighting device 1 is typically part of a connected lighting system that forms a mesh network (e.g. the Signify Interact or MasterConnect Zigbee systems) and in which the nodes of the lighting system are permanently powered and can therefore be active all the time. These lighting nodes may scan for (e.g. BLE) beacons of battery-powered sensor devices part of their time.

Upon receiving a beacon signal from a battery-powered sensor device, the lighting node will rebroadcast the beacon multiple times, e.g. for a specified amount of time. **In** this way, the user (device) which wants to receive this beacon signal has an improved chance of receiving it in time without jeopardizing the lifetime of the sensor battery. The time that the beacon is repeated by the lighting node may be made dependent on the repetition interval at which the lighting node receives the sensor beacons, avoiding the need to have this configured by an installer.

**In** addition, the lighting node may be configured to rebroadcast also secondary beacon signals received from other lighting nodes in order to increase the effective range of the sensor beacon signals. In order to limit the range, a counter could be added to each of the beacon signals to indicate how many times the beacon has already been repeated. This would allow the node to limit the rebroadcasting of beacon signals to a certain number of repetitions.

Another way of reducing bandwidth use is to reduce the number of less relevant or irrelevant messages that is broadcast. To reduce bandwidth use, the processor 5 may be configured to re-broadcast less relevant or irrelevant sensor data less often or not at all. The beacon signal broadcast by the sensor device may indicate whether the broadcast signal needs to be re-broadcast or not or may indicate the relevance of the sensor data.

When the user device receives a beacon signal (the original beacon signal broadcast by the battery-powered sensor device or the rebroadcasted/secondary beacon signals broadcast by the lighting nodes), the user (device) can use various types of information in order to find out where the sensor data is coming from:
- Dedicated location information, originating from the sensor device;
- The RSSI of the original sensor beacon signal if the user device receives the original beacon signal;
- The repetition counter included in the rebroadcasted/secondary beacon signal.

The user could use the RSSI of the original sensor beacon signal and/or the repetition counter(s) by moving around and checking changes in this information to see if he is "getting warmer".

If the lighting grid is relatively dense (which is often the case), the user device may receive multiple beacon signals (both original and secondary) originating from the same sensor device. To get a better estimate of the location of the sensor device, an application running on the user device may be able to make a better estimate of how far away the sensor device is by comparing beacon signals from different lighting nodes and selecting the original beacon signal if received or the secondary beacon signal with the lowest repetition counter otherwise.

Alternatively or additionally, the user device may be able to transmit a beacon signal of its own, i.e. a user beacon signal, indicating that it is searching for a certain lighting node, i.e. the lighting node closest to the sensor device (e.g. the lighting node that broadcast the secondary beacon signal with the lowest repetition counter). This user beacon signal would identify this certain lighting node. This user beacon could be repeated by the lighting nodes in the same way as the sensor beacons, until it reaches the specified lighting node. This lighting node could then identify itself to the user by changing its lighting output in some identifiable way (color, dimming level, blinking pattern), making it easy for the user to find the empty parking spot.

In addition, the user could signal an emergency situation by having his user device transmit a specific beacon signal using a dedicated mobile device app, which could trigger nearby lighting nodes that receive this specific beacon signal to indicate the direction towards the nearest exit. In this particular case, each lighting node that receives this beacon signal may use some internal logic to determine if it needs to start this optical indication (e.g. by blinking, color change, or other ways) to the user, and optionally transmit a confirmation beacon, and/or to just rebroadcast the original beacon to alert the facility manager. In the app, the reception of this confirmation beacon could trigger a message that explains to the user what to look for. Alternatively, this message could be shown even without such a confirmation beacon.

In the embodiment of the lighting device 1 shown in Fig. 1, the lighting device 1 comprises one processor 5. In an alternative embodiment, the lighting device 1 comprises multiple processors. The processor 5 of the lighting device 1 may be a general-purpose processor or an application-specific processor. The wireless receiver 3 and the wireless transmitter 4 may use one or multiple wireless communication technologies. e.g. BLE, for communicating with the battery-powered sensor device 11 and the user device 21. In an alternative embodiment, multiple receivers and/or multiple transmitters are used instead of a single receiver and a single transmitter.

In the embodiment shown in Fig. 1, a separate receiver and a separate transmitter are used. In an alternative embodiment, the receiver 3 and the transmitter 4 are combined into a transceiver. The lighting device 1 may comprise other components typical for a connected lighting device such as a power connector and a memory. The invention may be implemented using a computer program running on one or more processors.

In the embodiment of Fig. 1, the mains-powered electronic device of the invention is a lighting device. In an alternative embodiment, the mains-powered electronic device of the invention is a different device that is mains-powered, e.g. a speaker device, an actuator device, a heating device, a HVAC, a bridge device, or a display device.

Fig. 2 shows, by non-limiting example, a parking garage with multiple mains-powered electronic devices and multiple battery-powered sensor devices. In this parking garage, the lighting device 1 and battery-powered sensor device 11 of Fig. 1 have been installed. Furthermore, lighting devices 41-44, which are configured in the same way as the lighting device 1, and battery-powered sensor devices 51-57, which are configured in the same way as the battery-powered sensor device 11, have been installed in the parking garage.

In the example of Fig. 2, lighting device 1 has been installed at a position at which it is able to rebroadcast beacon signals from battery-powered sensor devices 11 and 51 and rebroadcasted/secondary beacon signals from lighting devices 41 and 44. If a car enters the parking garage, battery-powered sensor device 11 may have detected a free parking spot. To preserve battery lifetime, the battery-powered sensor device 11 broadcasts beacons with a relatively large interval between successive broadcasts. To ensure that the user receives this information without significant delay, the lighting device 1 rebroadcasts each of these beacons a plurality of times.

Lighting device 41 has been installed at a position at which it is able to rebroadcast beacon signals from battery-powered sensor devices 52 and 53 and rebroadcasted/secondary beacon signals from lighting devices 1, 42 and 43. Lighting device 42 has been installed at a position at which it is able to rebroadcast beacon signals from battery-powered sensor devices 53 and 55 and rebroadcasted/secondary beacon signals from lighting devices 41 and 43.

Lighting device 43 has been installed at a position at which it is able to rebroadcast beacon signals from battery-powered sensor devices 54 and 55 and rebroadcasted/secondary beacon signals from lighting devices 41, 42 and 44. Lighting device 44 has been installed at a position at which it is able to rebroadcast beacon signals from battery-powered sensor devices 56 and 57 and rebroadcasted/secondary beacon signals from lighting devices 1 and 43. If battery-powered sensor device 56 has detected a free parking spot, the lighting device 44 rebroadcasts beacons with this sensor data. These rebroadcasted beacons are received and rebroadcast again by lighting device 1 and received by the user entering the parking garage with his car.

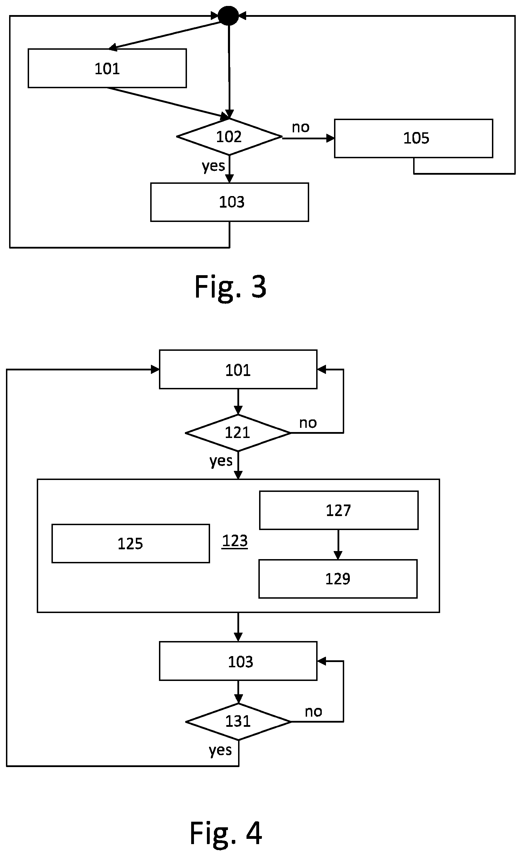

A first embodiment of the method of wirelessly broadcasting a plurality of beacons is shown in Fig. 3. A step 101 comprises receiving a wireless broadcast at a mains-powered electronic device. A step 102 comprises determining whether a new beacon signal, which comprises sensor data, has been received from a battery-powered sensor device in step 101. If so, a step 103 is performed. Step 103 comprises wirelessly broadcasting a secondary beacon signal. The secondary beacon comprises the sensor data received in step 101. Step 102 is performed directly after step 103 when a timer expires, unless a new beacon signal is received in step 101 first. If step 102 is performed directly after step 103, then a step 105 is performed after step 102.

If it is determined in step 102 that no new beacon signal has been received, step 105 is performed. Step 105 comprises wireless broadcasting a secondary beacon signal comprising the sensor data received in the most recent iteration of step 101, e.g. by rebroadcasting the same beacon signal received in step 101. As a result, a plurality of secondary beacon signals is wireless broadcast at different moments in time and each of these secondary beacon signals comprises the same sensor data. Step 101 or step 102 is performed after step 105.

In the embodiment of Fig. 3, a plurality of secondary beacon signals is broadcast for each beacon signal received from a battery-power sensor device in step 101. The sensor data from a received beacon signal is rebroadcast until another beacon signal is received from this battery-power sensor device. This other beacon signal may comprise the same sensor data or different sensor data. The beacon signal may comprise location information indicative of a location of the battery-powered sensor device. In this case, this location information may also be included in the plurality of secondary beacon signals broadcast in steps 103 and 105.

In the embodiment of Fig. 3, the mains-powered electronic device only receives beacon signals from a single battery-powered sensor device. In an alternative embodiment, the mains-powered electronic device receives beacon signals from multiple battery-powered sensor devices. In this alternative embodiment, multiple processes may run in parallel, each performing the method of Fig. 3, for example.

A second embodiment of the method of wirelessly broadcasting a plurality of beacons is shown in Fig. 4. Step 101 comprises receiving a wireless broadcast at a mains-powered electronic device. A step 121 comprises determining whether a beacon signal was received from a battery-powered sensor device in step 101. If so, then a step 123 is performed. If not, step 101 is repeated and the method proceeds as shown in Fig. 4.

Step 123 comprises determining an amount of time. In the embodiment of Fig. 3, step 123 is implemented by step 125 and/or steps 127 and 129. If the beacon signal specifies the amount of time, step 125 is performed. Step 125 comprises determining the amount of time from the beacon signal. If the beacon signal does not specify the amount of time, steps 127 and 129 may be performed. Step 127 comprises determining an interval between receiving two successive beacon signals from the (same) battery-powered sensor device. Step 129 comprises determining the amount of time based on the interval determined in step 127.

Step 103 is performed after step 123. Step 103 comprises wirelessly broadcasting a secondary beacon signal. The secondary beacon comprises sensor data comprised in the beacon signal received in step 101. Next, a step 131 comprises determining whether the amount of time determined in step 123 has elapsed since the receipt of the wireless broadcast in step 101. If not, step 103 is repeated. As a result, the plurality of secondary beacon signals is broadcast for the determined amount of time, e.g. the amount of time specified in the beacon signal. If it is determined in step 131 that the amount of time determined in step 123 has elapsed since the receipt of the wireless broadcast in step 101, step 101 is repeated and the method proceeds as shown in Fig. 4.

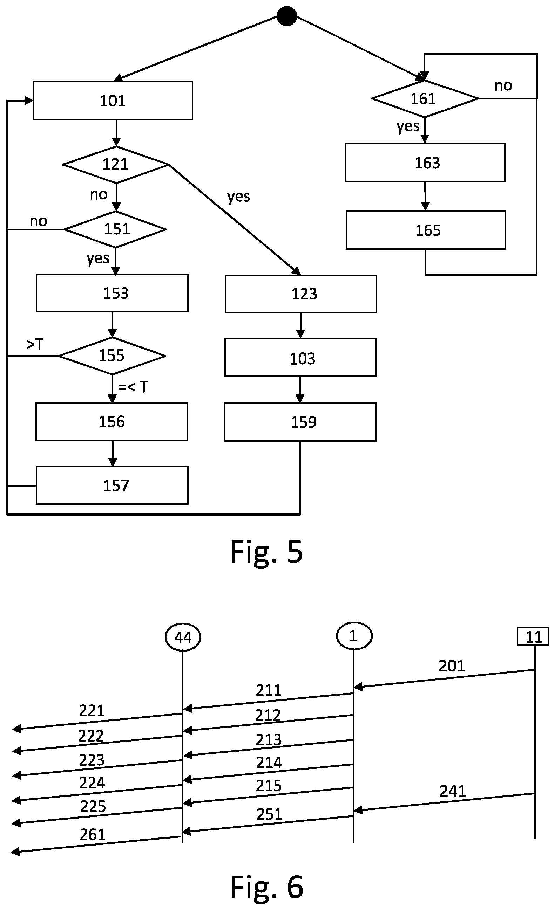

A third embodiment of the method of wirelessly broadcasting a plurality of beacons is shown in Fig. 5. Step 101 comprises receiving a wireless broadcast at a mains-powered electronic device. Step 121 comprises determining whether a beacon signal was received from a battery-powered sensor device in step 101. If so, step 123 is performed. Step 123 comprises determining an amount of time, e.g. from the beacon signal. Step 103 is performed after step 123. Step 103 comprises wirelessly broadcasting a secondary beacon signal. The secondary beacon comprises sensor data comprised in the beacon signal received in step 101.

A step 159 is performed after step 103. Step 159 comprises registering a plurality of timer values for the beacon signal received in step 101. The timer values/timers are associated with the sensor data comprised in this beacon signal. Step 101 is repeated after step 159 and the method proceeds as shown in Fig. 5.

A step 161 comprises determining whether one of the timer values registered in step 159 has elapsed. If not, step 161 is repeated until one of the timer values registered in step 159 has elapsed. Step 161 may be performed at the same time a wireless broadcast is received from another mains-powered electronic device or from another battery-powered sensor device in step 101 or while waiting for such a wireless broadcast, for example. If it is determined in step 161 that one of the timer values registered in step 159 has elapsed, a step 163 is performed.

Step 163 comprises obtaining the sensor data, and optionally other information, associated with the elapsed timer. Next, a step 165 is performed. Step 165 is similar to step 103. Step 165 comprises wirelessly broadcasting a secondary beacon signal. The secondary beacon comprises sensor data obtained in step 163. Step 161 is repeated after step 165 and the method proceeds as shown in Fig. 5.

If it is determined in step 121 that no beacon signal was received from a battery-powered sensor device in step 101, a step 151 is performed. Step 151 comprises determining whether a rebroadcasted beacon signal was received from another mains-powered electronic device in step 101. If so, a step 153 is performed. If not, step 101 is repeated and the method proceeds as shown in Fig. 5.

Step 153 comprises determining a number of repetitions from the rebroadcasted beacon signal received in step 101, e.g. from a field included in the beacon signal. Next, a step 155 comprises comparing the number of repetitions determined in step 153 with a threshold. If it is determined in step 155 that the number of repetitions exceeds the threshold, step 101 is repeated and the method proceeds as shown in Fig. 5. If it is determined in step 155 that the number of repetitions does not exceed the threshold, a step 156 is performed.

Step 156 comprises incrementing the number of repetitions by one. Next, a step 157 is performed. Step 157 comprises broadcasting a further secondary beacon signal. The further secondary beacon signal comprises further sensor data comprised in the rebroadcasted beacon signal received in step 101. This further sensor data was received by the other mains-powered electronic device as part of an original beacon signal from another battery-powered sensor device. The incremented number of repetitions determined in step 156 is included in in the further secondary beacon signal broadcast in step 157. Step 101 is repeated after step 157 and the method proceeds as shown in Fig. 5.

Fig. 6 shows an example of beacons broadcast by two mains-powered devices: lighting devices 1 and 44 of Fig. 2, which perform the method of Fig. 5, and by one battery-powered device: battery-powered sensor device 11. The battery-powered sensor device 11 broadcasts a beacon signal 201 and then enters a sleep state or switches its transmitter into a sleep state. When the lighting device 1 receives the beacon signal 201 (in step 101 of Fig. 5), it rebroadcasts the beacon signal 201 as secondary beacon signals 211-215 for a determined amount of time (in steps 103 and 165 of Fig. 5). After the sleep state has been exited, the battery-powered sensor device 11 transmits a beacon signal 241.

When the lighting device 1 receives the beacon signal 241, it rebroadcasts the beacon signal 241 as secondary beacon signals for the same or a different amount of time (in steps 103 and 165 of Fig. 5). Of these secondary broadcast signals, a secondary beacon signal 251 is shown in Fig. 6. Each time the lighting device 44 receives a rebroadcasted/secondary beacon signal, it rebroadcasts it as a further secondary beacon signal (in step 157 of Fig. 5). Further secondary beacon signals 221-225 and 261 correspond to rebroadcasted/secondary beacon signals 211-215 and 251, respectively.

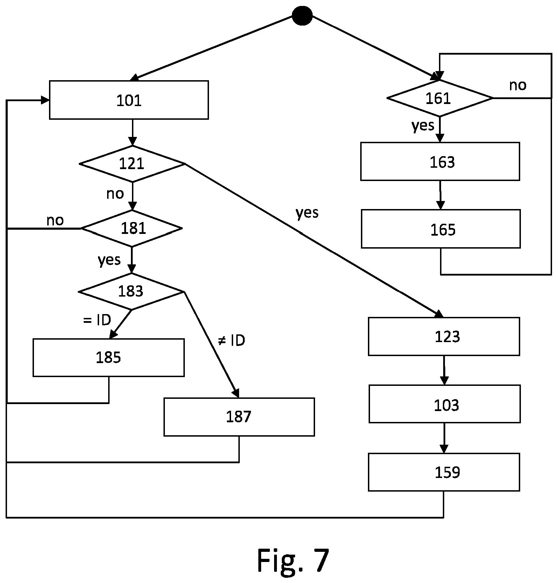

A fourth embodiment of the method of wirelessly broadcasting a plurality of beacons is shown in Fig. 7. Step 101 comprises receiving a wireless broadcast at a mains-powered electronic device. Step 121 comprises determining whether a beacon signal was received from a battery-powered sensor device in step 101. If so, steps 123, 103 and 159 are performed as described in relation to Fig. 5. Steps 161-165 are performed in the manner described in relation to Fig. 5.

If it is determined in step 121 that no beacon signal was received from a battery-powered sensor device in step 101, a step 181 is performed. Step 181 comprises determining whether a user beacon signal was received from a user device in step 101. If so, a step 183 is performed. If not, step 101 is repeated and the method proceeds as shown in Fig. 7.

Step 183 comprises comparing a device identifier comprised in the received user beacon signal with a locally stored device identifier. If it is determined in step 183, that the received device identifier matches the locally stored device identifier, a step 185 is performed. If not, a step 187 is performed. Step 185 comprises providing visual feedback, e.g. by changing a light color or intensity or by flashing. Step 187 comprises broadcasting one or more tertiary beacon signals which comprises the received device identifier. In the embodiment of Fig. 7, the locally stored device identifier may also be included in the secondary beacon signals broadcast in steps 103 and 165. Step 101 is repeated after step 185 or step 187 has been performed and the method proceeds as shown in Fig. 7.

The embodiments of Figs. 3 to 5 and 7 differ from each other in multiple aspects, i.e. multiple steps have been added or replaced. In variations on these embodiments, only a subset of these steps is added or replaced and/or one or more steps is omitted. For example, step 123 may be omitted from the embodiments of Figs. 5 and 7. Instead, for example, step 165 may be repeated for a beacon signal until another beacon signal is received from the same mains-powered electronic device, e.g. in a similar manner as described in relation to Fig. 3. Multiple of the embodiments may be combined. For example, the embodiments of Figs. 5 and 7 may be combined.

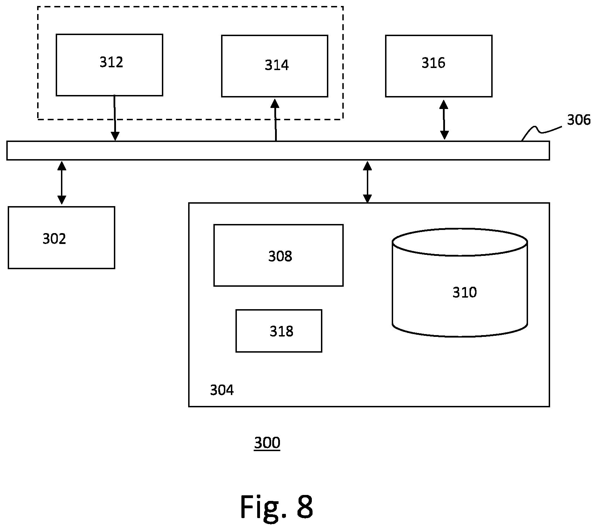

Fig. 8 depicts a block diagram illustrating an exemplary data processing system that may perform the method as described with reference to Figs. 3 to 5 and 7.

As shown in Fig. 8, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the quantity of times program code must be retrieved from the bulk storage device 310 during execution. The processing system 300 may also be able to use memory elements of another processing system, e.g. if the processing system 300 is part of a cloud-computing platform.

Input/output (I/O) devices depicted as an input device 312 and an output device 314 optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 8 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

As pictured in Fig. 8, the memory elements 304 may store an application 318. In various embodiments, the application 318 may be stored in the local memory 308, the one or more bulk storage devices 310, or separate from the local memory and the bulk storage devices. It should be appreciated that the data processing system 300 may further execute an operating system (not shown in Fig. 8) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Fig. 8 shows the input device 312 and the output device 314 as being separate from the network adapter 316. However, additionally or alternatively, input may be received via the network adapter 316 and output be transmitted via the network adapter 316. For example, the data processing system 300 may be a cloud server. In this case, the input may be received from and the output may be transmitted to a user device that acts as a terminal.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A lighting device (1), the lighting device being mains-powered, said lighting device (1) comprising:
a wireless receiver (3);
a wireless transmitter (4); and
at least one processor (5) configured to:
- receive, via said wireless receiver (3), a wireless broadcast of a beacon signal from a battery-powered sensor device (11), said beacon signal comprising sensor data of the battery-powered sensor device (11), and
- broadcast, via said wireless transmitter (4), a plurality of secondary beacon signals at different moments in time, each of said secondary beacon signals comprising said sensor data;
wherein said at least one processor (5) is configured to broadcast said plurality of secondary beacon signals until said at least one processor (5) receives another beacon signal from said battery-power sensor device (11), said other beacon signal comprising said sensor data or second sensor data, and broadcast a plurality of other secondary beacon signals at different moments in time, each of said other secondary beacon signals comprising said sensor data or said second sensor data from said other beacon signal

2. A lighting device (1) as claimed in claim 1, further comprising a light source (9) for illuminating an environment.

3. A lighting device (1) as claimed in claim 1 or 2, wherein said at least one processor (5) is configured to determine an amount of time and broadcast said plurality of secondary beacon signals for said specified amount of time.

4. A lighting device (1) as claimed in claim 3, wherein said beacon signal specifies said amount of time and said at least one processor (5) is configured to determine said amount of time from said beacon signal.

5. A lighting device (1) as claimed in claim 3, wherein said at least one processor (5) is configured to receive the another beacon signal from said battery-power sensor device (11), determine an interval between receiving said beacon signal and receiving said other beacon signal and determine said amount of time based on said interval.

6. A lighting device (1) as claimed in any one of the preceding claims, wherein said at least one processor (5) is configured to:
- receive, via said wireless receiver (3), a wireless broadcast of a rebroadcasted beacon signal from another lighting device (41-44), said rebroadcasted beacon signal comprising further sensor data, said further sensor data being received by said other lighting device (41-44) from another battery-powered sensor device (51-57) as part of an original beacon signal,
- broadcast, via said wireless transmitter (4), a further secondary beacon signal, said further secondary beacon signal comprising said further sensor data from said further beacon signal.

7. A lighting device (1) as claimed in claim 6, wherein said at least one processor (5) is configured to determine a number of repetitions from said rebroadcasted beacon signal, increment said number of repetitions by one, and include said incremented number of repetitions in said further secondary beacon signal.

8. A lighting device (1) as claimed in claim 7, wherein said at least one processor (5) is configured to compare said number of repetitions with a threshold and broadcast said further secondary beacon signal in dependence on said number of repetitions not exceeding said threshold.

9. A lighting device (1) as claimed in any one of the preceding claims, wherein said beacon signal comprises location information indicative of a location of said battery-powered sensor device (11) and said at least one processor (5) is configured to include said location information in said plurality of secondary beacon signals.

10. A lighting device (1) as claimed in any one of the preceding claims, wherein said at least one processor (5) is configured to:
- receive, via said wireless receiver (3), a wireless broadcast of a user beacon signal from a user device, said user beacon signal comprising a device identifier,
- compare said received device identifier with a locally stored device identifier, and
- provide visual feedback in dependence on said device identifier matching said locally stored device identifier.

11. A lighting device (1) as claimed in claim 10, wherein said at least one processor (5) is configured to broadcast, via said wireless transmitter (4), a tertiary beacon signal, said tertiary beacon signal comprising said received device identifier.

12. A lighting device (1) as claimed in claim 10 or 11, wherein said at least one processor (5) is configured to include said locally stored device identifier in said plurality of secondary beacon signals.

13. A method performed by a lighting device (1), the lighting device being mains-powered, of wirelessly broadcasting a plurality of beacons, said method comprising:
- receiving (101) a wireless broadcast of a beacon signal from a battery-powered sensor device at the lighting device (1), the lighting device being mains-powered, said beacon signal comprising sensor data of the battery-powered sensor device, and
- wirelessly broadcasting (103,105,165) a plurality of secondary beacon signals at different moments in time, each of said secondary beacon signals comprising said sensor data;
wherein said wirelessly broadcasting comprises broadcasting said plurality of secondary beacon signals until said mains-powered electronic device receives another beacon signal from said battery-power sensor device, said other beacon signal comprising said sensor data or second sensor data, and broadcasting a plurality of other secondary beacon signals at different moments in time, each of said other secondary beacon signals comprising said sensor data or said second sensor data from said other beacon signal.

14. A computer program product for a lighting device (1), the lighting device being mains-powered, the computer program product comprising computer program code to perform the method of claim 13 when the computer program product is run on a processing unit of the lighting device (1).

## Patentansprüche

1. Beleuchtungsvorrichtung (1), wobei die Beleuchtungsvorrichtung netzbetrieben ist, die Beleuchtungsvorrichtung (1) umfassend:
einen drahtlosen Empfänger (3);
einen drahtlosen Sender (4); und
mindestens einen Prozessor (5), der konfiguriert ist zum:
- Empfangen, über den drahtlosen Empfänger (3), eines drahtlosen Broadcasts eines Bakensignals von einer batteriebetriebenen Sensorvorrichtung (11), das Bakensignal umfassend Sensordaten der batteriebetriebenen Sensorvorrichtung (11), und
- Broadcasten, über den drahtlosen Sender (4), einer Vielzahl von sekundären Bakensignalen zu unterschiedlichen Zeitpunkten, jedes der sekundären Bakensignale umfassend die Sensordaten;
wobei der mindestens eine Prozessor (5) konfiguriert ist, um die Vielzahl von sekundären Bakensignalen zu broadcasten, bis der mindestens eine Prozessor (5) ein anderes Bakensignal von der batteriebetriebenen Sensorvorrichtung (11) empfängt, das andere Bakensignal umfassend die Sensordaten oder zweite Sensordaten, und eine Vielzahl von anderen sekundären Bakensignalen zu unterschiedlichen Zeitpunkten zu broadcasten, jedes der anderen sekundären Bakensignale umfassend die Sensordaten oder die zweiten Sensordaten von dem anderen Bakensignal

2. Beleuchtungsvorrichtung (1) nach Anspruch 1, ferner umfassend eine Lichtquelle (9) zum Erleuchten einer Umgebung.

3. Beleuchtungsvorrichtung (1) nach Anspruch 1 oder 2, wobei der mindestens eine Prozessor (5) konfiguriert ist, um eine Zeitspanne zu bestimmen und die Vielzahl von sekundären Bakensignalen für die angegebene Zeitspanne zu broadcasten.

4. Beleuchtungsvorrichtung (1) nach Anspruch 3, wobei das Bakensignal die Zeitspanne angibt und der mindestens eine Prozessor (5) konfiguriert ist, um die Zeitspanne aus dem Bakensignal zu bestimmen.

5. Beleuchtungsvorrichtung (1) nach Anspruch 3, wobei der mindestens eine Prozessor (5) konfiguriert ist, um das andere Bakensignal von der batteriebetriebenen Sensorvorrichtung (11) zu empfangen, ein Intervall zwischen dem Empfangen des Bakensignals und dem Empfangen des anderen Bakensignals zu bestimmen und die Zeitspanne basierend auf dem Intervall zu bestimmen.

6. Beleuchtungsvorrichtung (1) nach einem der vorstehenden Ansprüche, wobei der mindestens eine Prozessor (5) konfiguriert ist zum:
- Empfangen, über den drahtlosen Empfänger (3), eines drahtlosen Broadcasts eines erneut gebroadcasteten Bakensignals von einer anderen Beleuchtungsvorrichtung (41-44), das erneut gebroadcastete Bakensignal umfassend weitere Sensordaten, wobei die weiteren Sensordaten durch die andere Beleuchtungsvorrichtung (41-44) von einer anderen batteriebetriebenen Sensorvorrichtung (51-57) als Teil eines ursprünglichen Bakensignals empfangen werden,
- Broadcasten, über den drahtlosen Sender (4) eines weiteren sekundären Bakensignals, das weitere sekundäre Bakensignal umfassend die weiteren Sensordaten von dem weiteren Bakensignal.

7. Beleuchtungsvorrichtung (1) nach Anspruch 6, wobei der mindestens eine Prozessor (5) konfiguriert ist, um eine Anzahl von Wiederholungen aus dem erneut gebroadcasteten Bakensignal zu bestimmen, die Anzahl von Wiederholungen um eins zu inkrementieren und die inkrementierte Anzahl von Wiederholungen in das weitere sekundäre Bakensignal einzuschließen.

8. Beleuchtungsvorrichtung (1) nach Anspruch 7, wobei der mindestens eine Prozessor (5) konfiguriert ist, um die Anzahl von Wiederholungen mit einem Schwellenwert zu vergleichen und das weitere sekundäre Bakensignal in Abhängigkeit davon zu broadcasten, ob die Anzahl von Wiederholungen den Schwellenwert nicht überschreitet.

9. Beleuchtungsvorrichtung (1) nach einem der vorstehenden Ansprüche, wobei das Bakensignal Positionsinformationen, hinweisend auf eine Position der batteriebetriebenen Sensorvorrichtung (11), umfasst, und der mindestens eine Prozessor (5) konfiguriert ist, um die Positionsinformationen in die Vielzahl von sekundären Bakensignalen einzuschließen.

10. Beleuchtungsvorrichtung (1) nach einem der vorstehenden Ansprüche, wobei der mindestens eine Prozessor (5) konfiguriert ist zum:
- Empfangen, über den drahtlosen Empfänger (3), eines drahtlosen Broadcasts eines Benutzer-Bakensignals von einer Benutzervorrichtung, das Benutzer-Bakensignal umfassend einen Vorrichtungsbezeichner,
- Vergleichen des empfangenen Vorrichtungsbezeichners mit einem lokal gespeicherten Vorrichtungsbezeichner, und
- Bereitstellen einer visuellen Rückkopplung in Abhängigkeit davon, ob der Vorrichtungsbezeichner mit dem lokal gespeicherten Vorrichtungsbezeichner übereinstimmt.

11. Beleuchtungsvorrichtung (1) nach Anspruch 10, wobei der mindestens eine Prozessor (5) konfiguriert ist, um, über den drahtlosen Sender (4), ein tertiäres Bakensignal zu broadcasten, das tertiäre Bakensignal umfassend den empfangenen Vorrichtungsbezeichner.

12. Beleuchtungsvorrichtung (1) nach Anspruch 10 oder 11, wobei der mindestens eine Prozessor (5) konfiguriert ist, um den lokal gespeicherten Vorrichtungsbezeichner in der Vielzahl von sekundären Bakensignalen einzuschließen.

13. Verfahren, das durch eine Beleuchtungsvorrichtung (1) durchgeführt wird, wobei die Beleuchtungsvorrichtung netzbetrieben ist, zum drahtlosen Broadcasten einer Vielzahl von Baken, das Verfahren umfassend:
- Empfangen (101) eines drahtlosen Broadcasts eines Bakensignals von einer batteriebetriebenen Sensorvorrichtung an der Beleuchtungsvorrichtung (1), wobei die Beleuchtungsvorrichtung netzbetrieben ist, das Bakensignal umfassend Sensordaten der batteriebetriebenen Sensorvorrichtung, und
- drahtloses Broadcasten (103,105,165) einer Vielzahl von sekundären Bakensignalen zu unterschiedlichen Zeitpunkten, jedes der sekundären Bakensignale umfassend die Sensordaten;
wobei das drahtlose Broadcasten das Broadcasten der Vielzahl von sekundären Bakensignalen umfasst, bis die netzbetriebene elektronische Vorrichtung ein anderes Bakensignal von der batteriebetriebenen Sensorvorrichtung empfängt, das andere Bakensignal umfassend die Sensordaten oder zweite Sensordaten, und das Broadcasten einer Vielzahl von anderen sekundären Bakensignalen zu unterschiedlichen Zeitpunkten, jedes der anderen sekundären Bakensignale umfassend die Sensordaten oder die zweiten Sensordaten von dem anderen Bakensignal.

14. Computerprogrammprodukt für eine Beleuchtungsvorrichtung (1), wobei die Beleuchtungsvorrichtung netzbetrieben ist, das Computerprogrammprodukt umfassend Computerprogrammcode, um das Verfahren nach Anspruch 13 durchzuführen, wenn das Computerprogrammprodukt auf einer Verarbeitungseinheit der Beleuchtungsvorrichtung (1) ausgeführt wird.

## Revendications

1. Dispositif d'éclairage (1), le dispositif d'éclairage étant alimenté par secteur, ledit dispositif d'éclairage (1) comprenant :
un récepteur sans fil (3) ;
un transmetteur sans fil (4) ; et
au moins un processeur (5) configuré pour :
- recevoir, par l'intermédiaire dudit récepteur sans fil (3), une diffusion sans fil d'un signal de balise en provenance d'un dispositif capteur alimenté par batterie (11), ledit signal de balise comprenant des données de capteur du dispositif capteur alimenté par batterie (11), et
- diffuser, par l'intermédiaire dudit transmetteur sans fil (4), une pluralité de signaux de balise secondaires à différents moments dans le temps, chacun desdits signaux de balise secondaires comprenant lesdites données de capteur ;
dans lequel ledit au moins un processeur (5) est configuré pour diffuser ladite pluralité de signaux de balise secondaires jusqu'à ce que ledit au moins un processeur (5) reçoive un autre signal de balise en provenance dudit dispositif capteur alimenté par batterie (11), ledit autre signal de balise comprenant lesdites données de capteur ou des secondes données de capteur, et diffuser une pluralité d'autres signaux de balise secondaires à différents moments dans le temps, chacun desdits autres signaux de balise secondaires comprenant lesdites données de capteur ou lesdites secondes données de capteur provenant dudit autre signal de balise

2. Dispositif d'éclairage (1) selon la revendication 1, comprenant en outre une source de lumière (9) permettant d'illuminer un environnement.

3. Dispositif d'éclairage (1) selon la revendication 1 ou 2, dans lequel ledit au moins un processeur (5) est configuré pour déterminer une quantité de temps et diffuser ladite pluralité de signaux de balise secondaires pendant ladite quantité de temps spécifiée.

4. Dispositif d'éclairage (1) selon la revendication 3, dans lequel ledit signal de balise spécifie ladite quantité de temps et ledit au moins un processeur (5) est configuré pour déterminer ladite quantité de temps à partir dudit signal de balise.

5. Dispositif d'éclairage (1) selon la revendication 3, dans lequel ledit au moins un processeur (5) est configuré pour recevoir cet autre signal de balise en provenance dudit dispositif capteur alimenté par batterie (11), déterminer un intervalle entre la réception dudit signal de balise et la réception dudit autre signal de balise et déterminer ladite quantité de temps en fonction dudit intervalle.

6. Dispositif d'éclairage (1) selon l'une quelconque des revendications précédentes, dans lequel ledit au moins un processeur (5) est configuré pour :
- recevoir, par l'intermédiaire dudit récepteur sans fil (3), une diffusion sans fil d'un signal de balise rediffusé en provenance d'un autre dispositif d'éclairage (41-44), ledit signal de balise rediffusé comprenant des données de capteur supplémentaires, lesdites données de capteur supplémentaires étant reçues par ledit autre dispositif d'éclairage (41-44) en provenance d'un autre dispositif capteur alimenté par batterie (51-57) dans le cadre d'un signal de balise original,
- diffuser, par l'intermédiaire dudit transmetteur sans fil (4), un signal de balise secondaire supplémentaire, ledit signal de balise secondaire supplémentaire comprenant lesdites données de capteur supplémentaires en provenance dudit signal de balise supplémentaire.

7. Dispositif d'éclairage (1) selon la revendication 6, dans lequel ledit au moins un processeur (5) est configuré pour déterminer un nombre de répétitions à partir dudit signal de balise rediffusé, incrémenter ledit nombre de répétitions de un, et inclure ledit nombre incrémenté de répétitions dans ledit signal de balise secondaire supplémentaire.

8. Dispositif d'éclairage (1) selon la revendication 7, dans lequel ledit au moins un processeur (5) est configuré pour comparer ledit nombre de répétitions à un seuil et diffuser ledit signal de balise secondaire supplémentaire en dépendance dudit nombre de répétitions ne dépassant pas ledit seuil.

9. Dispositif d'éclairage (1) selon l'une quelconque des revendications précédentes, dans lequel ledit signal de balise comprend des informations de localisation indiquant une localisation dudit dispositif capteur alimenté par batterie (11) et ledit au moins un processeur (5) est configuré pour inclure lesdites informations de localisation dans ladite pluralité de signaux de balise secondaires.

10. Dispositif d'éclairage (1) selon l'une quelconque des revendications précédentes, dans lequel ledit au moins un processeur (5) est configuré pour :
- recevoir, par l'intermédiaire dudit récepteur sans fil (3), une diffusion sans fil d'un signal de balise utilisateur provenant d'un dispositif utilisateur, ledit signal de balise utilisateur comprenant un identificateur de dispositif,
- comparer ledit identificateur de dispositif reçu à un identificateur de dispositif stocké localement, et
- fournir une rétroaction visuelle en dépendance dudit identificateur de dispositif concordant avec ledit identificateur de dispositif stocké localement.

11. Dispositif d'éclairage (1) selon la revendication 10, dans lequel ledit au moins un processeur (5) est configuré pour diffuser, par l'intermédiaire dudit transmetteur sans fil (4), un signal de balise tertiaire, ledit signal de balise tertiaire comprenant ledit identificateur de dispositif reçu.

12. Dispositif d'éclairage (1) selon la revendication 10 ou 11, dans lequel ledit au moins un processeur (5) est configuré pour inclure ledit identificateur de dispositif stocké localement dans ladite pluralité de signaux de balise secondaires.

13. Procédé mis en œuvre par un dispositif d'éclairage (1), le dispositif d'éclairage étant alimenté par secteur, consistant à diffuser sans fil une pluralité de balises, ledit procédé comprenant :
- la réception (101) d'une diffusion sans fil d'un signal de balise en provenance d'un dispositif capteur alimenté par batterie au niveau du dispositif d'éclairage (1), le dispositif d'éclairage étant alimenté par secteur, ledit signal de balise comprenant des données de capteur du dispositif capteur alimenté par batterie, et
- la diffusion sans fil (103, 105, 165) d'une pluralité de signaux de balise secondaires à différents moments dans le temps, chacun desdits signaux de balise secondaires comprenant lesdites données de capteur ;
dans lequel ladite diffusion sans fil comprend la diffusion de ladite pluralité de signaux de balise secondaires jusqu'à ce que ledit dispositif électronique alimenté par secteur reçoive un autre signal de balise en provenance dudit dispositif capteur alimenté par batterie, ledit autre signal de balise comprenant lesdites données de capteur ou des secondes données de capteur, et la diffusion d'une pluralité d'autres signaux de balise secondaires à différents moments dans le temps, chacun desdits autres signaux de balise secondaires comprenant lesdites données de capteur ou lesdites secondes données de capteur provenant dudit autre signal de balise.

14. Produit programme informatique destiné à un dispositif d'éclairage (1), le dispositif d'éclairage étant alimenté par secteur, le produit programme informatique comprenant un code de programme informatique pour mettre en œuvre le procédé selon la revendication 13 lorsque le produit programme informatique est exécuté sur une unité de traitement du dispositif d'éclairage (1).
